# EUROPEAN PATENT APPLICATION

(11) **EP 2 476 884 A2**
(43) Date of publication of application: **18.07.2012**
(21) Application number: 12150728.9
(22) Date of filing: 11.01.2012
(51) Int. Cl.: F02C 7/143, F02C 7/16

(54) **Water recovery system for a cooling tower**

(30) Priority: 13.01.2011 US 201113005756
(71) Applicant: General Electric Company, Schenectady, New York 12345 (US)
(72) Inventor: Laing, Donald Gordon, Houston, TX Texas 77015 (US); Dhingra, PhD., Harish Chandra, Friendswood, TX Texas 77546 (US); Shapiro, Andrew Philip, Niskayuna, NY New York 12309 (US); Tang, Ching-Jen, Niskayuna, NY New York 12309 (US)
(74) Representative: Cleary, Fidelma

(57) **Abstract**

A water recovery system (40) for a cooling tower (50) includes an intercooler (44) having a first circuit portion (46) and a second circuit portion. The first circuit portion (46) is configured and disposed to receive a liquid desiccant and the second circuit portion (48) is configured and disposed to receive coolant. A flash drum (55) includes an inlet (15, 24, 57) connected to the first circuit portion (46), a vapor outlet (60) and a liquid desiccant outlet (63). A condenser (100) is fluidly coupled to the vapor outlet (60) of the flash drum (55). The condenser (100) includes a condensate outlet (22). A cooling tower (50) is fluidly connected to the liquid desiccant outlet (63) of the flash drum (55) and the condenser (100). The cooling tower (50) includes a water stripper (52) having a collector member, and a heat exchanger (68) arranged below the water stripper (52). The collector member is configured to receive water laden liquid desiccant and the heat exchanger (68) is configured and disposed to receive make-up water from the condenser (100).

## Description

### BACKGROUND OF THE INVENTION

The subject matter disclosed herein relates to cooling towers and, more particularly, to a water recovery system for a cooling tower.

Turbomachines operate at high pressures. In order to enhance operation in applications such as power generation and mechanical drive gas turbines many turbomachines employ intercoolers that are configured to lower compressed air temperature between compressor stages. Conventional systems for lowering the temperature of the compressed air include both dry and wet cooling systems.

In a dry cooling system, heat is transferred from the extraction air into cooling water that circulates through heat transfer plates or tubes having heat transfer surfaces. After absorbing heat, the cooling water is passed to a dry cooling tower and guided over additional heat transfer plates or tubes before being re-circulated to cool the extraction air. In a wet cooling system, after absorbing heat from the extraction air, the cooling water is passed to a cooling tower. In the cooling tower, the cooling water is brought into thermally conductive contact with air. The air extracts heat from the cooling water creating a plume or vapor. The cooling water is passed back to exchange heat with the extraction air, and the plume is passed to ambient. In an alternative wet cooling system, water is sprayed onto heat transfer plates or tubes such as employed in the dry system to further cool closed loop cooling water. The closed loop cooling water is passed back to exchange heat with the extraction air and the plume is passed to ambient. Often times, such as in very dry environments or where water is not in abundance, it is desirable to extract water from the plume.

### BRIEF DESCRIPTION OF THE INVENTION

According to one aspect, the invention resides in a water recovery system for a cooling tower including an intercooler member having a first circuit portion and a second circuit portion. The first circuit portion is configured and disposed to receive a liquid desiccant and the second circuit portion is configured and disposed to receive coolant. A flash drum includes an inlet fluidly connected to the first circuit portion, a vapor outlet and a liquid desiccant outlet. A condenser is fluidly coupled to the vapor outlet of the flash drum. The condenser includes a condensate outlet. A cooling tower is fluidly connected to the liquid desiccant outlet of the flash drum and the condenser. The cooling tower includes a water stripper having a collector member, and a cooler arranged below the water stripper. The collector member is configured and disposed to receive water laden liquid desiccant and the cooler is configured and disposed to receive make-up water from the condenser.

According to another aspect, the invention resides in a turbomachine system including a first turbomachine section including an extraction outlet, a second turbomachine section including an extraction inlet fluidly connected to the extraction outlet of the first turbomachine section, and the water recovery system described above operatively connected to the turbomachine system.

According to yet another aspect, the invention resides in a method of extracting water from vapor emitted by a cooling tower including passing a water laden liquid desiccant though an intercooler, absorbing heat into the water laden liquid desiccant forming a heat laden liquid desiccant, directing the heat laden liquid desiccant through a flash drum, extracting water vapor from the heat laden liquid desiccant in the flash drum forming a substantially water free liquid desiccant, introducing the substantially water free liquid desiccant into wet air in the cooling tower, absorbing water from the wet air into the substantially water free liquid desiccant forming a water laden liquid desiccant, and passing the water laden liquid desiccant back into the intercooler.

These and other advantages and features will become more apparent from the following description taken in conjunction with the drawings.

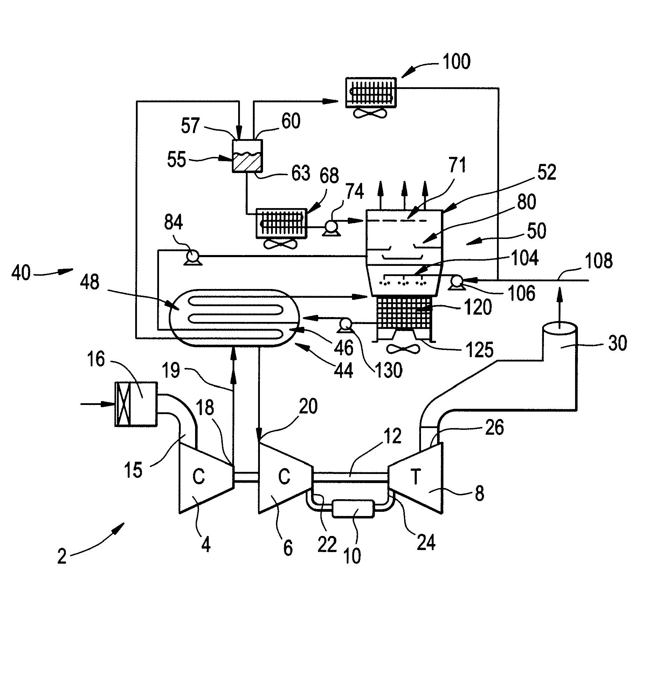

### BRIEF DESCRIPTION OF THE DRAWING

Embodiments of the present invention will now be described, by way of example only, with reference to the accompanying drawings in which:

The figure is a schematic diagram of a turbomachine system including a system for recovering water from a cooling tower in accordance with an exemplary embodiment.

The detailed description explains embodiments of the invention, together with advantages and features, by way of example with reference to the drawings.

### DETAILED DESCRIPTION OF THE INVENTION

As best shown in the figure, a turbomachine system in accordance with an exemplary embodiment is indicated generally at 2. Turbomachine system 2 includes a first compressor section 4 operatively connected to a second compressor section 6. Second compressor section 6 is fluidly connected to a turbine section 8 via combustor 10. First and second compressor sections 4 and 6 are operatively connected to turbine section 8 through a common compressor/turbine shaft 12. First compressor section 4 includes an inlet 15 that receives air through an intake 16. First compressor section 4 also includes an extraction air outlet 18 that delivers extraction air 19 to an extraction air inlet 20 on second compressor section 6. Second compressor section 6 is also shown to include an outlet 22 that is fluidly connected to combustor 10. Turbine section 8 is shown to include an inlet 24 that is fluidly connected to a combustor outlet (not separately labeled) and an outlet or exhaust 26 that leads to an exhaust stack 30. In accordance with the exemplary embodiment shown, heat is removed from extraction air 19 prior to introduction into extraction air inlet 20. The heat is removed by a water recovery system 40, which, as will be discussed more fully below, in addition to recovering water from cooling tower vapor, also lowers a temperature of extraction air flowing between first and second compressor sections 4 and 6.

As shown, water recovery system 40 includes a primary or intercooler 44 having a first circuit portion 46 and a second circuit portion 48 that lead to a cooling tower 50 having a water stripper or absorber 52. Water stripper 52 strips or absorbs moisture contained in the air passing through the cooling tower 50. As will be discussed more fully below, first circuit portion 46 is fluidly isolated from second circuit portion 48 in intercooler 44. First and second circuit portions 46 and 48 are fluidly connected to cooling tower 50. First circuit portion 46 includes a liquid desiccant that is in a heat exchange relationship with extraction air 19. As will become more readily apparent below, the liquid desiccant is configured to remove moisture from vapor passing from cooling tower 50. In accordance with the exemplary embodiment, the liquid desiccant takes the form of aqueous alkali halides, aqueous alkali nitrates, or glycol. Alkali halides include lithium bromide (LiBr), lithium chloride (LiCl), calcium chloride (CaCl₂), zinc chloride (ZnCl₂), zinc bromide (ZnBr) and the like. Alkali nitrates include potassium nitrate (kNO₃), and lithium nitrate (LiNO₃), and the like. Glycol includes ethylene glycol (C₂H₆O₂) and the like. Of course it should be understood that the particular type of liquid desiccant could readily vary.

First circuit portion 46 leads from intercooler 44 to a flash drum 55. Coolant or water laden liquid desiccant enters an inlet 57 of flash drum 55. In flash drum 55, the water from the water laden liquid desiccant flashes or vaporizes leaving behind a concentrated solution or substantially water free liquid desiccant. By substantially water free, it should be understood that the liquid desiccant leaving flash drum 55 has a water content that is at least 0.4% less than the water content of the liquid desiccant entering flash drum 55. The vapor passes from flash drum 55 through a vapor outlet 60 and the substantially water free liquid desiccant passes from flash drum 55 through a liquid desiccant outlet 63.

The substantially water free laden liquid desiccant passed from liquid desiccant outlet 63 to a heat exchanger 68. Heat exchanger 68 removes heat entrained within the substantially water free liquid desiccant. From heat exchanger 68, the substantially water free liquid desiccant is directed through a liquid desiccant spray member 71 by a pump 74. Liquid desiccant spray member 71 distributes the substantially water free liquid desiccant into wet or humid air flowing upward from cooling tower 50. The substantially water free liquid desiccant absorbs moisture entrained in the wet or humid air, transforms into water laden liquid desiccant, and falls into a liquid desiccant collector 80. A pump 84 urges the water laden liquid desiccant back to first circuit 46 of intercooler 44.

In further accordance with the exemplary embodiment, vapor passing from flash drum 55 is guided to a condenser 100. The vapor is cooled and transformed into make-up water. The make-up water is then passed to a water spray member 104 by a pump 106. At this point it should be understood that additional make-up water may be supplied to water spray member 104 via an external water supply conduit 108. The make-up water falls or is sprayed upon a secondary heat exchanger or cooler 120. Secondary cooler 120 is used to reject the remaining heat from second circuit portion 48 to ambient. In accordance with one aspect of the exemplary embodiment, secondary cooler 120 includes a wicking material that is utilized to enhance evaporative performance. In accordance with one aspect of the exemplary embodiment, collection tray 125 is arranged below secondary cooler 120. The collection tray is positioned to catch excess water passing from secondary cooler 120. A pump (not shown) is fluidly connected to collection tray 125 and operates to recirculate any recovered water back to, for example, pump 106. Another pump 130 urges cooling water back to second circuit portion 48 of intercooler 44. With this arrangement, water recovery system 40 not only reduces the loss of water exiting a cooling tower, but also provides cooling to lower temperatures of compressor extractions. Of course, it should be understood that the intercooler (or equivalent heat exchanger) coupled to a cooling tower could be employed in a wide variety of installations such as a steam turbine condenser system but should not be considered as being limited to cooling turbomachine extractions.

The exemplary embodiment has advantages over alternative dry cooling solutions. A conventional dry cooling system would supply high temperature coolant exiting the intercooler to an air-cooled heat exchanger. The coolant would be cooled in the air-cooled heat exchanger to a required return temperature of the intercooler. Air-cooled heat exchangers designed for this purpose are very large and expensive, in order to be suitable for ambient conditions that include above normal temperatures that often provide small temperature differences between the air and the coolant return temperature. In contrast, the exemplary embodiment permits the air-cooled heat exchanger to be operated at higher exiting temperatures than is possible with conventional dry cooling system. For example, exiting temperature of the liquid desiccant air-cooler is about 122 °F (50 °C). This is significantly higher than the required intercooler return temperature of about 102 °F (38.9 °C). This added temperature margin or driving force leads to smaller and less expensive air-coolers and greater operating margin in hot weather.

An additional advantage of the exemplary embodiment is flexibility in operating conditions. For example, it is possible to operate the cooling system so that liquid desiccant collects nearly all of the water used in the cooling tower, so that very little makeup water is required. However the system can be designed to have the flexibility to use more water in the cooling tower than is collected by the liquid desiccant. This operation may be useful in hot weather as it allows the system to be optimized for year-round performance, as opposed to be designed for the most challenging conditions.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A water recovery system (40) for a cooling tower (50), the water recovery system (40) comprising:
an intercooler member (44) including a first circuit portion (46) and a second circuit portion (48), the first circuit portion (46) configured and disposed to receive a liquid desiccant and the second circuit portion (48) being configured and disposed to receive coolant;
a flash drum (55) including an inlet fluidly connected to the first circuit portion (46), a vapor outlet (60) and a liquid desiccant outlet (63);
a condenser (100) fluidly coupled to the vapor outlet of the flash drum (55), the condenser including a condensate outlet; and
a cooling tower (50) fluidly connected to the liquid desiccant outlet (63) of the flash drum (55) and the condenser (100), the cooling tower (50) including a water stripper (52) having a collector member, and a heat exchanger (68) arranged below the water stripper (52), the collector member being configured and disposed to receive water laden liquid desiccant and the heat exchanger (68) being configured and disposed to receive make-up water from the condenser (100).

2. The water recovery system (40) according to claim 1, further comprising: a heat exchanger (68) fluidly connected between the desiccant outlet (63) of the flash drum (55) and the water stripper (52), the heat exchanger (68) being configured and disposed to lower a temperature of liquid desiccant flowing from the flash drum (55) to the water stripper (52).

3. The water recovery system (40) according to claim 1 or 2, wherein the first circuit portion (46) is fluidly isolated from the second circuit portion (48) in the intercooler (44).

4. The water recovery system (40) according to claim 1 2, or 3, further comprising: a desiccant spray member (71) arranged in the water stripper (52), the desiccant spray member (71) being fluidly coupled to the liquid desiccant outlet (63) of the flash drum (55).

5. The water recovery system (40) according to any of claims 1 to 4, further comprising: a water spray member (104) arranged in the water stripper (52), the water spray member (104) being fluidly coupled to the condensate outlet of the condenser (100).

6. The water recovery system (40) according to claim 5, wherein the water spray member (104) directs the make-up water onto the heat exchanger (68).

7. The water recovery system (40) according to any of claims 1 to 6, wherein the collector member is fluidly connected to the first circuit portion (46).

8. The water recovery system (40) according to any of claims 1 to 7, wherein the heat exchanger (68) is fluidly connected to the second circuit portion (48).

9. A turbomachine system comprising:
a first turbomachine section (4) including an extraction outlet (18);
a second turbomachine section (6) including an extraction inlet (20) fluidly connected to the extraction outlet (18) of the first turbomachine section (4); and
the water recovery system (40) of any of claims 1 to 8, operatively connected to the turbomachine system.

10. A method of extracting water from vapor emitted by a cooling tower (50), the method comprising:
passing a water laden liquid desiccant though an intercooler (44);
absorbing heat into the water laden liquid desiccant forming a heat laden liquid desiccant;
directing the heat laden liquid desiccant through a flash drum (55);
extracting water vapor from the heat laden liquid desiccant in the flash drum (55) forming a substantially water free liquid desiccant;
introducing the substantially water free liquid desiccant into wet air in the cooling tower (50);
absorbing water from the wet air into the substantially water free liquid desiccant forming a water laden liquid desiccant; and
passing the water laden liquid desiccant back into the intercooler (44).

11. The method of claim 10, further comprising: collecting the water laden liquid desiccant in a collector arranged in the water stripper portion (52) of the cooling tower (50).

12. The method of claim 10 or 11, wherein introducing the substantially water free liquid desiccant into the wet air comprises spraying the substantially water free liquid desiccant into the wet air.

13. The method of any of claims 10 to 12, further comprising: passing the water vapor from the flash drum (55) to a condenser (100) to form liquid water.

14. The method of claim any of claims 10 to 13, further comprising: spraying the liquid water onto a heat exchanger (68) in the cooling tower (50.
